# EUROPEAN PATENT SPECIFICATION

(11) **EP 2 919 420 B1**
(45) Date of publication and mention of the grant of the patent: **06.11.2019**
(21) Application number: 15154552.2
(22) Date of filing: 10.02.2015
(51) Int. Cl.: H04L 12/28

(54) **Method and apparatus for sharing data**
Verfahren und Vorrichtung zur gemeinsamen Nutzung von Daten
Procédé et appareil pour partager des données

(30) Priority: 13.03.2014 CN 201410092860
(43) Date of publication of application: 16.09.2015
(73) Proprietor: Xiaomi Inc., Beijing 100085 (CN)
(72) Inventor: Liu, Tiejun, 100085 BEIJING (CN); Li, Zheng, 100085 BEIJING (CN); Cheng Liang, 100085 BEIJING (CN)
(74) Representative: Delumeau, François Guy

(56) References cited:
- WO-A1-2013/103493
- US-A1- 2010 131 613

## Description

### TECHNICAL FIELD

The present disclosure generally relates to the field of communication, and particularly to a method and an apparatus for sharing data.

### BACKGROUND

DLNA (Digital Living Network Alliance) is a nonprofit organization launched by Sony, Intel and Microsoft and aims to solve a problem of sharing digital media contents among consumer electronic devices.

A network architecture based on DLNA includes one or more DLNA clients and a DLNA server which are connected through a wired network or a wireless network therebetween. The DLNA server is configured to provided media contents and includes a platform for sharing multimedia documents which supports sharing of media contents such as pictures, music, videos and the like. The DLNA client is configured to access and play the media contents shared by the DLNA server. The DLNA server manages and controls the shared media contents through a configuration document, and the media contents which are written in a configuration document in advance may be accessed and played by the DLNA client.

Document D1 (WO 2013/103493 A1) discloses a method and apparatus for content directory server presentation. The method includes connecting a media device to a home network, the home network containing a plurality of media content sources, and updating a catalog of media content available to the media device based on scanning at least one media content source.

Document D2 (US 2010/0131613 A1) discloses a media sharing network wherein the presence of a physical medium loaded on the network is sensed and the presence of metadata and content on the physical medium is sensed.

During the process of achieving the present disclosure, the inventor finds that the above method has at least the following disadvantages: in the related art, only the media contents which are configured in the a configuration document in advance are sharable and may be shared by the DLNA server, however in case that a mobile storage device such as a USB flash disk or a mobile hard disk and the like is plugged into a DLNA device where the DLNA server runs, the media contents in the mobile storage device are not immediately sharable while the mobile device is plugged into the DLNA device, thus the DLNA server cannot share these media contents in the mobile storage device with the DLNA client.

### SUMMARY

In order to solve the problem in the related art that the DLNA server cannot share the media contents in the mobile storage device, a method and an apparatus for sharing data are provided by embodiments of the present disclosure. The technical solutions are as follows.

According to a first aspect of the embodiments of the present disclosure, a method for sharing data is provided. The method is applied in a DLNA device provided with a DLNA server and comprises the steps of: detecting a first event of a mobile storage device being plugged into the DLNA device; acquiring a mount path of the mobile storage device through the DLNA server upon detection of the first event, wherein data stored under the mount path in the mobile storage device is automatically sharable with at least one DLNA client once the mount path is acquired; and sharing the data with the at least one DLNA client according to the mount path through the DLNA server.

According to the invention, the step of acquiring the mount path of the mobile storage device through the DLNA server upon detection of the first event comprises: calling a preset script when the event of the mobile storage device being plugged into the DLNA device is detected; adding the mount path of the mobile storage device into a configuration document of the DLNA server through the called preset script, to allow the data stored under the mount path in the mobile storage device to be sharable with the at least one DLNA client via the DLNA server; and triggering the DLNA server through the called preset script so as to reload the configuration document so as to identify sharable data.

Some advantages brought by the technical solutions according to this embodiment may include:
Once the event of the mobile storage device being plugged into the DLNA device is detected by the DLNA device, the mount path of the mobile storage device is acquired through the DLNA server, wherein the data stored under the mount path in the mobile storage device is automatically sharable with at least one DLNA client once the mount path is acquired and the data in the mobile storage device is shared according to the mount path with the at least one DLNA client through the DLNA server. Thus, the problem in the related art that the media contents in the mobile storage device are not immediately sharable while the mobile storage device is plugged into the DLNA server is solved. Compared with the technical solution in the related art, in this embodiment, the DLNA server acquires the mount path of the mobile storage device upon detection of the event of plugging, and the data corresponding to the mount path is automatically sharable with at least one DLNA client once the mount path is acquired. Thus the data can be shared with the DLNA client immediately once the mobile storage device is plugged into the DLNA device and the sharing efficiency of the DLNA system may be significantly improved.

Thus, the mount path of the mobile storage device is written into the configuration document of the DLNA server through the preset script, so that the DLNA server may automatically add the mount path into the configuration document, and thus the data in the mobile storage device automatically becomes sharable.

Alternatively, the method also includes: detecting a second event of the mobile storage device being unplugged from the DLNA device; calling a preset script when the second event of the mobile storage device being unplugged from the DLNA device is detected; removing the mount path of the mobile storage device from the configuration document through the called preset script to make the data stored under the mount path in the mobile storage device to be non-sharable with the at least one DLNA client via the DLNA server; and triggering the DLNA server through the called preset script so as to reload the configuration document so as to identify sharable data.

Thus, the DLNA device removes the mount path of the mobile storage device from the configuration document through the preset script. It is avoided the failure of the DLNA server tending to share data in a mobile storage device has been unplugged from the DLNA device.

Alternatively, the steps of triggering the DLNA server through the called preset script to reload the configuration document so as to identify sharable data may comprise: transmitting a preset signal to the DLNA server through the preset script; reloading the configuration document through the DLNA server after the preset signal is received by the DLNA server; and reading the mount path in the configuration document through the DLNA server.

In case of the event of unplugging, the DLNA device transmits a preset signal to the DLNA server through the preset script, such that the DLNA server reloads the configuration document upon reception of the preset signal. Since the refreshed configuration document does not record the mount path of the mobile storage device unplugged, the DLNA server will not tend to share the data in the mobile storage unplugged.

Alternatively, the method also comprises: closing a document system monitoring mechanism for a predetermined period through the DLNA server. The document system monitoring mechanism is configured to monitor documents in the DLNA server and to provide feedback to the DLNA server. A start time of the predetermined period is a moment when the preset signal is received by the DLNA server, and an end time of the predetermined period is a moment when the sharing path in the configuration document is read by the DLNA server.

By closing the document system monitoring mechanism for a while during the above predetermined period, a system overhead may be reduced, and feedback notification may be prevented from being repeatedly transmitted to the DLNA server by the internal core since the documents are accessed, read and written etc. during a process that the DLNA server scans and acquires the documents in the mobile storage device.

According to a second aspect of the embodiments of the present disclosure, an apparatus for sharing data is provided. The apparatus is applied in a DLNA device provided with a DLNA server and comprises: a plugging detecting module configured detecting a first event of a mobile storage device being plugged into the DLNA device; a path acquisition module configured to acquire a mount path of the mobile storage device through the DLNA server upon detection of the first event, wherein data stored under the mount path in the mobile storage device is automatically sharable with at least one DLNA client once the mount path is acquired; and a data sharing module configured to share the data in the mobile storage device with the at least one DLNA client according to the mount path through the DLNA server.

Furthermore, the path acquisition module comprises: a script calling unit, a path adding unit and a path reading unit. The script calling unit is configured to call a preset script when the first event of the mobile storage device being plugged into the DLNA device is detected. The path adding unit is configured to add the mount path of the mobile storage device into a configuration document of the DLNA server through the preset script, to allow the data stored under the mount path in the mobile storage device to be sharable with the at least one DLNA client via the DLNA server. The path reading unit is configured to trigger the DLNA server through the preset script to reload the configuration document so as to identify sharable data.

Alternatively, the path acquisition module also comprises: an unplugging detecting unit and a path removing unit. The unplugging detecting unit is configured to detect a second event of the mobile storage device being unplugged from the DLNA device. The script calling unit is further configured to call the preset script when the second event of the mobile storage device being unplugged from the DLNA device is detected. The path removing unit is configured to remove the mount path of the mobile storage device from a configuration document of the DLNA server through the called preset script to allow the data stored under the mount path in the mobile storage device to be non-sharable with the at least one DLNA client via the DLNA server. The path reading unit is further configured to trigger the DLNA server through the called preset script to reload the configuration document so as to identify sharable data.

Alternatively, the path reading unit comprises: a signal transmission sub unit, a document loading sub unit and a path reading sub unit. The signal transmission sub unit is configured to transmit a preset signal to the DLNA server through the preset script. The document loading sub unit is configured to reload the configuration document through the DLNA server after the preset signal is received by the DLNA server. The path reading sub unit is configured to read the mount path in the configuration document through the DLNA server.

Alternatively, the apparatus also comprises: a monitor closing module configured to close a document system monitoring mechanism for a predetermined period through the DLNA server. The document system monitoring mechanism is configured to monitor documents in the DLNA server and to provide feedback to the DLNA server. A start time of the predetermined period is a moment when the preset signal is received by the DLNA server, and an end time of the predetermined period is a moment when the sharing path in the configuration document is read by the DLNA server.

The advantages and features of the apparatus according to the embodiments of the present disclosure are the same with those of the above described method and will not be repeated here.

Alternatively, the steps of the method for sharing data are determined by computer program instructions.

Consequently, according to a third aspect, the invention is also directed to a computer program for executing the steps of a method for sharing data as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that the general description above and the detailed description below are only exemplary, and the present disclosure is not limited thereto.

### BRIEF DESCRIPTION OF THE DRAWINGS

In order to describe embodiments according to the embodiments of the present disclosure more clearly, a brief introduction of accompany drawings used in the description will be given hereinafter. Obviously, the following accompany drawings are merely some embodiments of the present disclosure, and one person skilled in the art may obtain other accompany drawings according to the following accompany drawings without paying any creative labor.
Figure 1 is a flow chart showing a method for sharing data according to an exemplary embodiment.
Figure 2 is a flow chart showing a method for sharing data according to another exemplary embodiment.
Figure 3 is a block diagram showing an apparatus for sharing data according to an exemplary embodiment.
Figure 4 is a block diagram showing an apparatus for sharing data according to another exemplary embodiment.
Figure 5 is a block diagram showing a device for sharing data according to an exemplary embodiment.

Embodiments of the present disclosure are illustrated in the above accompany drawings and will be described in further detail hereinafter. These accompany drawings and literal description are not intended to limit the scope of the idea of the present disclosure, but to explain the principle of the present disclosure with reference to particular embodiments for those skilled in the art.

### DETAILED DESCRIPTION

In order to make the objects, the technical solutions and advantages of the present disclosure more clear, embodiments of the present disclosure will be described in a further detail with reference to the accompany drawings. Obviously, based on the embodiments of the present disclosure, other embodiments obtained by a person skilled in the art without paying any creative labor are all belong to the protection scope of the present disclosure.

Before the description of the method for sharing data provided by the present disclosure, a DLNA device related to the present disclosure will be described. The DLNA device may be a smart router which includes an independent operating system in addition to a router function of an ordinary router, and may be provided with various applications by a user, and also has a powerful USB (Universal Serial Bus) sharing function.

A DLNA server runs on the DLNA device. The DLNA server is a server type of application, and is configured to implement the sharing of media contents such as pictures, music, videos and the like with one or more DLNA client (for example, smart phone, tactile pad, personal computer, etc.). The DLNA server includes an operating system which runs on the DLNA server and may be a deeply customized operating system based on OpenWrt. The DLNA device may also include a storage medium such as a hard disk therein, which is configured to store data such as pictures, music and videos. In addition, the DLNA device also includes a USB interface which may support access of a mobile storage device such as a USB flash disk, a mobile hard disk and the like.

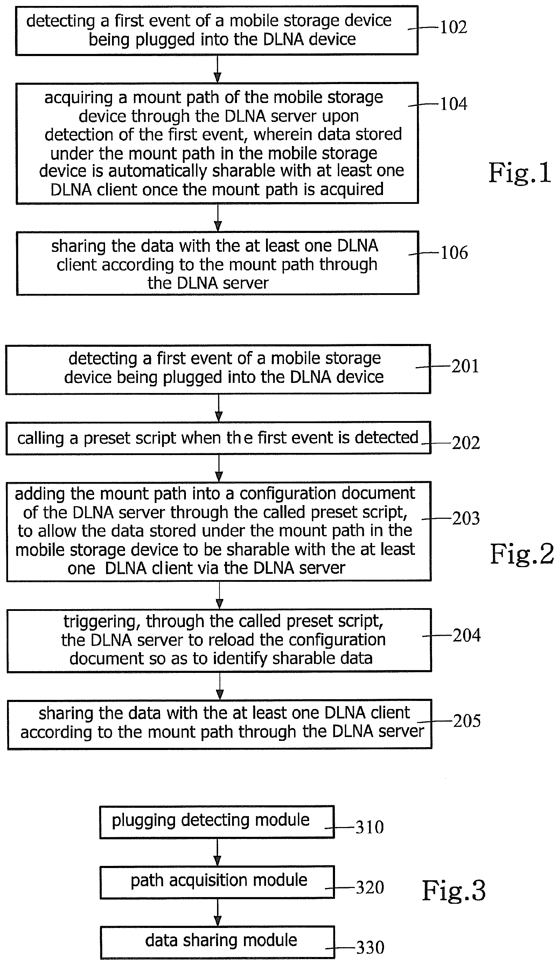

Figure 1 is a flow chart showing a method for sharing data according to an exemplary embodiment. This embodiment will be illustrated by taking an example that the method for sharing data is applied to a DLNA device provided with a DLNA server. The method for sharing data may include the following steps.

In step 102, an event of a mobile storage device being plugged into the DLNA device is detected by the DLNA device.

In step 104, a mount path of the mobile storage device is acquired by the DLNA server upon detection of the event, wherein data stored under the mount path in the mobile storage device automatically becomes sharable with at least one DLNA client once the mount path is acquired. As known in the art, the mount path indicates where the data stores in the mobile storage device.

In step 106, the data in the mobile storage device are shared with one or more DLNA clients according to the mount path through the DLNA server.

Figure 2 is a flow chart showing a method for sharing data according to another exemplary embodiment. This embodiment will be illustrated by applying the method for sharing data to a DLNA device provided with a DLNA server. The method for sharing data may include the following steps.

In step 201, an event of a mobile storage device being plugged into the DLNA device is detected by the DLNA device.

The DLNA device detects the event of the mobile storage device being plugged into the DLNA device. As known in the art, a hot swapping is generated when the mobile storage device such as a USB flash disk, a mobile hard disk and the like is plugged in or unplugged from the DLNA device, and may be detected by an operating system of the DLNA device.

In step 202, a preset script is called by the DLNA device when the event of the mobile storage device being plugged into the DLNA device is detected.

As described above, for example, when a hot swapping is detected by the operating system of the DLNA device, the event of the mobile storage device being plugged into the DLNA device is detected. Upon detection of this event, the DLNA device calls the preset script. This preset script is an automatic script document (Bash script, Unix script, Java script, Visual Basic script, etc.) installed in the DLNA device. When this script is called, it functions, for example, to update (ex. add/remove a mount path into/from) a configuration document of the DLNA server, to trigger the DLNA server to reload the configuration document so as to identify sharable data.

In step 203, the mount path of the mobile storage device is added to a configuration document of the DLNA server through the called preset script to allow the data stored under the mount path in the mobile storage device to be sharable with one or more DLNA clients through the DLNA server.

The DLNA device adds the mount path of the mobile storage device to the configuration document of the DLNA server once the preset script is called. The configuration document is configured to record at least one sharing path of data which is sharable to one or more DLNA clients through the DLNA server, the mount path added into the configuration document automatically becomes a sharing path. As known in the art, the sharing path indicates where sharable data is stored in a storage medium, the sharing path is for example such as media_dir=/userdisk/data. As those skilled in the art will apprehend, the DLNA server may only share the data which is corresponding to a sharing path recorded in the configuration document with the DLNA clients. In other words, even if data is stored in a storage medium connected to the DLNA device, the data, for which there is no corresponding sharing path recorded in the configuration document of the DLNA server, cannot be shared (i.e. not sharable) from the storage medium to the DLNA clients through the DLNA sever. One or more sharing paths may be recorded in the configuration document.

In this embodiment, once the mount path of the mobile storage device is added to the configuration document through the preset script that is called by the DLNA device, the mount path is automatically the sharing path, thus the data stored under the mount path in the mobile storage device automatically becomes sharable with the DLNA clients.

In step 204, the DLNA server is triggered by the called preset script to reload the configuration document so as to identify the sharable data.

The DLNA device triggers the DLNA server through the called preset script to reload the configuration document so as to identify the sharable data by reading their corresponding sharing paths recorded in the configuration document. As described above, the mount path has automatically become a sharing path which allows the data stored under the mount path in the mobile storage device to be sharable with the DLNA clients.

In step 205, the data in the mobile storage device is shared with the DLNA clients through the DLNA server according to the mount path, since the data has already become sharable, as described above.

The DLNA device shares the data in the mobile storage device according to the mount path through the DLNA server. As known in the art, in order to share the data according to the mount path, the DLNA server usually scans the data that are stored under the mount path, for example, it scans documents such as pictures, music and videos located under according to the mount path, to create index information (ex. information on the type, the name, the directory of the documents) and shares the documents with the DLNA clients by providing them with these index information so that the DLNA clients can locate, access and play the documents.

It should be noted that after receiving the preset signal transmitted by the preset script, the DLNA server may also perform the following steps: a document system monitoring mechanism is closed for a predetermined period through the DLNA server. The document system monitoring mechanism is configured to monitor documents in the DLNA server which includes monitoring of accessing, reading, writing, modifying, deleting, creating or renaming, etc., and to provide feedback to the DLNA server. A start time of the predetermined period is a moment when the preset signal is received by the DLNA server, and an end time of the predetermined period is a moment when the sharing path in the configuration document is read by the DLNA server.

It should be further noted that the method may include the following steps:
(1) An event of the mobile storage device being unplugged from the DLNA device is detected.
   The DLNA device detects the event of the mobile storage device being unplugged from the DLNA device. Similarly to the detection of the event of the mobile storage device being plugged into the DLNA device, as described above, when the mobile storage device is unplugged from the DLNA device, a hot swapping will be generated and thus may be detected by the operating system.
(2) The preset script is called when the event of the mobile storage device being unplugged from the DLNA device is detected.
   Similarly to the case when the event of the mobile storage device being plugged into the DLNA device is detected, when the event of the mobile storage device being unplugged from the DLNA device is detected by the DLNA device, the preset script is called.
(3) The mount path of the mobile storage device is removed from the configuration document of the DLNA server to allow the data stored under the mount path in the mobile storage device to be non-sharable with the at least one DLNA client via the DLNA server.
(4) The DLNA server is triggered through the preset script to reload the configuration document so as to identify sharable data.

Hereinafter are embodiments of the apparatus according to the present disclosure which may be configured to perform the embodiments of the method according to the present disclosure. Details that are not described in the embodiments of the apparatus according to the present disclosure may be referred to the embodiments of the method according to the present disclosure.

Figure 3 is a block diagram showing an apparatus for sharing data according to an exemplary embodiment. The apparatus for sharing data may be implemented by software as a part or the whole of a DLNA server in a DLNA device. The apparatus for sharing data may include a plugging detecting module 310, a path acquisition module 320 and a data sharing module 330.

The plugging detecting module 310 is configured to detect an event of a mobile storage device being plugged into the DLNA device.

The path acquisition module 320 is configured to acquire a mount path of the mobile storage device through the DLNA server upon detection of this event, wherein data stored under the mount path in the mobile storage device is automatically sharable with at least one DLNA client once the mount path is acquired.

The data sharing module 330 is configured to share the data in the mobile storage device with the at least one DLNA client according to the mount path through the DLNA server.

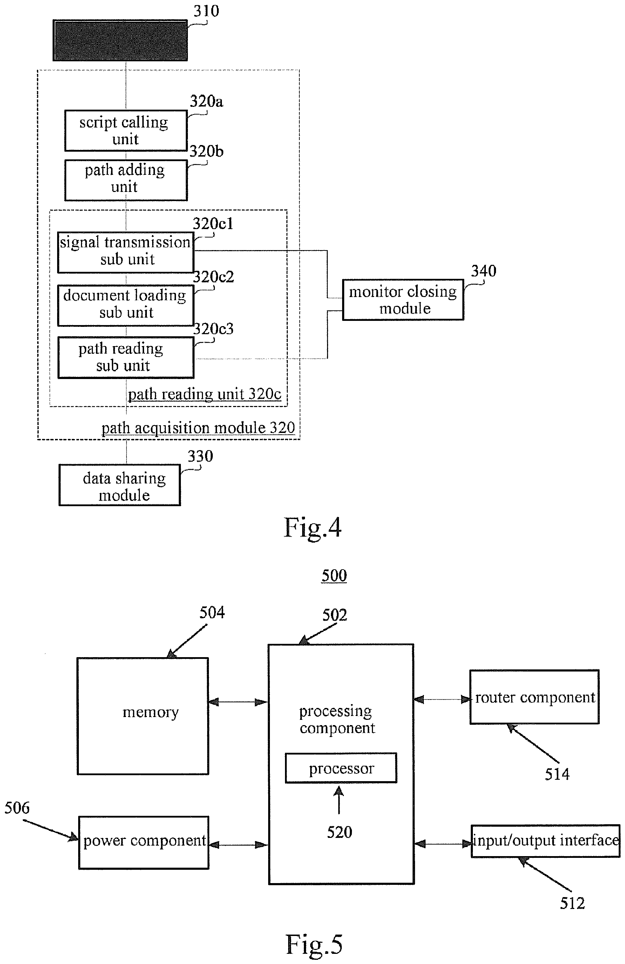

Figure 4 is a block diagram showing an apparatus for sharing data according to another exemplary embodiment. The apparatus for sharing data may be implemented by software as a part or the whole of a DLNA server in a DLNA device. The apparatus for sharing data may include a plugging detecting module 310, a path acquisition module 320 and a data sharing module 330.

The plugging detecting module 310 is configured to detect an event of a mobile storage device being plugged into the DLNA device.

The path acquisition module 320 is configured to acquire a mount path of the mobile storage device through the DLNA server upon detection of this event, wherein data stored under the mount path in the mobile storage device is automatically sharable with at least one DLNA client once the mount path is acquired.

The path acquisition module 320 includes a script calling unit 320a, a path adding unit 320b and a path reading unit 320c.

The script calling unit 320a is configured to call a preset script when the event of the mobile storage device being plugged into the DLNA device is detected.

The path adding unit 320b is configured to add the mount path of the mobile storage device to a configuration document of the DLNA server through the preset script, to allow the data stored under the mount path in the mobile storage device to be sharable with the at least one DLNA client via the DLNA server.

The path reading unit 320c is configured to trigger the DLNA server through the preset script to reload the configuration document so as to identify sharable data.

Alternatively, the path acquisition module 320 also includes: an unplugging detecting unit and a path removing unit (not shown).

The unplugging detecting unit is configured to detect an event of the mobile storage device being unplugged from the DLNA device.

The script calling unit 320a is also configured to call the preset script when the event of the mobile storage device being unplugged from the DLNA device is detected.

The path removing unit is configured to remove the mount path of the mobile storage device from a configuration document of the DLNA server through the called preset script to make the data stored under the mount path in the mobile storage device to be non-sharable with the at least one DLNA client via the DLNA server.

The path reading unit 320c is also configured to trigger the DLNA server through the called preset script so as to reload the configuration document so as to identify sharable data.

The path reading unit 320c includes a signal transmission sub unit 320c1, a document loading sub unit 320c2 and a path reading sub unit 320c3.

The signal transmission sub unit 320c1 is configured to transmit a preset signal to the DLNA server through the preset script.

The document loading sub unit 320c2 is configured to reload the configuration document through the DLNA server after the preset signal is received by the DLNA server.

The path reading sub unit 320c3 is configured to read the mount path in the configuration document through the DLNA server.

The data sharing module 330 is configured to share data with the at least one DLNA client according to the mount path through the DLNA server.

Alternatively, the apparatus further includes a monitor closing module 340 configured to close a document system monitoring mechanism for a predetermined period through the DLNA server. The document system monitoring mechanism is configured to monitor documents in the DLNA server and to provide feedback to the DLNA server;
A start time of the predetermined period is a moment when the preset signal is received by the DLNA server, and an end time of the predetermined period is a moment when the sharing path in the configuration document is read by DLNA server.

It should be noted that, the process of sharing data performed by the device for sharing data provided by the above-described embodiments, is only illustrated by example of functional modules as the above-mentioned. While in practice, the above functions may be performed by different modules as desired, that is, the internal structure of the device may be divided into different functional modules, so as to achieve all or a part of the functions described above. In addition, the method and the device for sharing data provided by the above-described embodiments belong to the same conception, therefore, the detailed implementing process of the device may refer to the embodiments of the method, and the detailed description thereof are not repeated herein.

Figure 5 is a block diagram showing a device for sharing data according to an exemplary embodiment. For example, the device 500 may be a smart router.

Referring to Figure 5, the device 500 may include one or more of the following components: a processing component 502, a memory 504, a power component 506, an input/output (I/O) interface 512 and a router component 514.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, videos, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The router component 514 is a component configured to connect various LANs and WANs over the Internet. The router component 514 may be a component configured to automatically select and set a route according to the conditions of channels, and transmit signals by an optimal path according to the sequence.

In addition, the device 500 may further include a USB interface (not shown), configured to support connection of a mobile storage device such as a U disk, a mobile hard disk and the like.

Also, a DLAN server runs in the device 500. The DLNA server is a server type of application, configured to implement the sharing of media contents such as pictures, music, videos and the like.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 520 in the device 500, for performing the above-described methods. For example, the non-transitory computer-readable storage medium may be a ROM, a RAM, a CD-ROM, a magnetic tape, a floppy disc, an optical data storage device, and the like.

In addition, the above steps of the method and the units of the system may also by implemented with a controller and a computer-readable storage device which stores computer programs that cause the controller to realize the above steps and functions of the units.

In addition, it should be appreciated that the above mentioned computer-readable storage device (for example, a memory) may be a volatile memory or a nonvolatile memory, or may include the both. For example, but without limitation, the nonvolatile memory may include a read only memory (ROM), a programmable ROM (PROM), an electrically programmable ROM (EPROM), an electrically erasable programmable ROM (EEPROM) or a flash memory. The volatile memory may include a random access memory (RAM) which may serve as an external cache RAM memory. As an example, but without limitation, the RAM may be of various forms, such as a synchronous RAM (DRAM), a dynamic RAM (DRAM), a synchronous DRAM (SDRAM), a double data rate SDRAM (DDR SDRAM), an enhanced SDRAM (ESDRAM), a synchronous link DRAM (SLDRAM) and a direct Rambus RAM (DRRAM). The storage device according to the disclosed aspects is intended to include but is not limited to these and other suitable types of memories.

It should be appreciated by those skilled in the art that, various exemplary logical blocks, modules, circuits and algorithm steps described in conjunction with the present disclosure may be implemented as electronic hardware, computer software or combination of both. In order to clearly illustrate the interchangeability between the hardware and the software, a general description has been given to various illustrative components, blocks, modules, circuits and functions of steps. It depends on particular applications and the restrictions applied to the design of the whole system that such functions will be implemented as software or hardware. Those functions may be realized in various means with respect to each of the particular applications by those skilled in the art without departing the scope of the present disclosure.

Various illustrative logical blocks, modules and circuits described in conjunction with the present disclosure may be implemented or performed by the following components that are designed to perform the above functions: a general purpose processor, a digital signal processor (DSP), a dedicated integrated circuit (ASIC), a field programmable gate array (FPGA) or other programmable logic device, discrete gates or transistor logics, discrete hardware components or any combination of these components. The general purpose processor may be a microprocessor. Alternatively, the processor may be any one of a conventional processor, a controller, a microcontroller or a state machine. The processor may be implemented as combination of computing devices, such as combination of a DSP and a microprocessor, a plurality of microprocessors, one or more microprocessors in conjunction with a DSP core, or any other such configuration.

The method and steps of the algorithm described in conjunction with the present disclosure may be directly contained in hardware, in a software module executed by a processor or in combination of the both. The software may reside in a RAM memory, a flash memory, a ROM memory, an EPROM memory, an EEPROM memory, a registers, a hard disk, a removable disk, a CD-ROM, or any other storage medium known in the art. An exemplary storage medium is coupled to the processor such the processor can read information from the storage medium or write information thereto. In an alternative embodiment, the storage medium maybe integrated with the processor. The processor and the storage medium may reside in an ASIC which may reside in a user terminal. In an alternative embodiment, the processor and the storage medium may reside in a user terminal as discrete components.

In one or more exemplary designs, the above functions may be implemented in hardware, software, firmware or any combination thereof. If implemented in software, the above functions may be stored in a computer readable medium as one or more instructions or codes, or transmitted through the computer readable medium. The computer readable medium includes computer storage medium and communication medium. The communication medium includes any medium that may be used to transmit computer programs from one location to another location. The storage medium may be any available medium that is accessible by a general or special computer. For example, but without limitation, the computer readable medium may include a RAM, a ROM, an EEPROM, a CD-ROM or other CD storage devices, disk storage device or other magnetic storage devices, or any other medium that may be used to carry or store the required program codes in a form of instructions or data structure and may be accessible by a general or special computer or a general or special processor. In addition, any connection may be appropriately called as a computer-readable medium. For example, if a coaxial cable, a fiber optic cable, a twisted pair, a digital subscriber line (DSL) or wireless technologies such as infrared rays, radio and microwave are used to transmit software from a website, a server or other remote source, the above coaxial cable, the fiber optic cable, the twisted pair, the DSL or wireless technologies such as infrared rays, radio and microwave are all within the definition of the medium. As used herein, the disk and the optical disk includes a compression disk (CD), a laser disc, an optical disk, a digital versatile disc (DVD), a floppy disks and a blue-ray disk, wherein the magnetic disk normally represents data magnetically, and the optical disk represents data optically by utilizing a laser. The combination of the above should also be included in the scope of the computer readable medium.

Although the above embodiments of the present disclosure are disclosed exemplary embodiments, it should be noticed that, various alteration and modification may be made without departing the scope of the present disclosure, which is defined by the claims. The functions, steps and/or operations of the method claims according to the described embodiments of the present disclosure, may not necessarily be performed in a particular order. In addition, although the element of the present disclosure is described or prescribed in a single form, it may be multiple-form, unless it is explicitly prescribed as a single form.

The sequence numbers of the above embodiments of the present disclosure are only for description purpose, and do not represent any preference of those embodiments.

It should be understood by those skilled in the art that, all or a part of the steps of the above embodiments may be implemented through hardware, or through a program that instructs a related hardware. The program may be stored on a computer-readable storage medium which may be read-only memory, magnetic or optical disks.

## Claims

1. A method for sharing data applied in a DLNA device provided with a DLNA server, comprising a step of:
detecting (102, 201) a first event of a mobile storage device being plugged into the DLNA device;
acquiring (104) a mount path of the mobile storage device through the DLNA server upon detection of the first event,
wherein data stored under the mount path in the mobile storage device is automatically sharable with at least one DLNA client once the mount path is acquired; and wherein the method further comprises a step of:
sharing (106, 205) the data with the at least one DLNA client according to the mount path through the DLNA server;
the method being **characterized in that**, the step of acquiring (104) the mount path of the mobile storage device through the DLNA server upon detection of the first event comprises the steps of:
calling (202) a preset script when the first event is detected;
adding (203) the mount path into a configuration document of the DLNA server through the called preset script, to allow the data stored under the mount path in the mobile storage device to be sharable with the at least one DLNA client via the DLNA server; and
triggering (204), through the called preset script, the DLNA server to reload the configuration document so as to identify sharable data.

2. The method according to claim 1, **characterized in that**, the method further comprises the steps of:
detecting a second event of the mobile storage device being unplugged from the DLNA device;
calling a preset script when the second event is detected ;
removing the mount path from a configuration document of the DLNA server through the called preset script to make the data stored under the mount path in the mobile storage device to be non-sharable with the at least one DLNA client via the DLNA server; and
triggering, through the called preset script, the DLNA server to reload the configuration document so as to identify sharable data.

3. The method according to any one of claims 1-2, **characterized in that**, the method further comprises:
closing a document system monitoring mechanism for a predetermined period through the DLNA server, the document system monitoring mechanism being configured to monitor documents in the DLNA server and to provide feedback to the DLNA server;
wherein, a start time of the predetermined period is a moment when a preset signal is received by the DLNA server, and an end time of the predetermined period is a moment when the mount path in a configuration document is read by the DLNA server.

4. An apparatus for sharing data applied in a DLNA device provided with a DLNA server, comprising:
a plugging detecting module (310) configured to detecting a first event of a mobile storage device being plugged into the DLNA device;
a path acquisition module (320) configured to acquire a mount path of the mobile storage device through the DLNA server upon detection of the first event,
wherein data stored under the mount path in the mobile storage device is automatically sharable with at least one DLNA client once the mount path is acquired; and wherein the apparatus further comprises:
a data sharing module (330) configured to share the data with the at least one DLNA client according to the mount path through the DLNA server;
the apparatus being **characterized in that**, the path acquisition module (320) comprises: a script calling unit (320a), a path adding unit (320b) and a path reading unit (320c);
the script calling unit (320a) is configured to call a preset script when the first event is detected;
the path adding unit (320b) is configured to add the mount path into a configuration document of the DLNA server through the preset script, to allow the data stored under the mount path in the mobile storage device to be sharable with the at least one DLNA client via the DLNA server; and
the path reading unit (320c) is configured to trigger the DLNA server through the preset script so as to reload the configuration document so as to identify sharable data.

5. The apparatus according to claim 4, **characterized in that**, the path acquisition module (320) further comprises: an unplugging detecting unit and a path removing unit;
the unplugging detecting unit is configured to detect a second event of the mobile storage device being unplugged from the DLNA device;
the script calling unit (320a) is further configured to call the preset script when the second event is detected;
the path removing unit is configured to remove the mount path from a configuration document of the DLNA server through the called preset script to make the data stored under the mount path in the mobile storage device to be non-sharable with the at least one DLNA client via the DLNA server; and
the path reading unit (320c) is further configured to trigger the DLNA server through the called preset script so as to reload the configuration document so as to identify sharable data.

6. The apparatus according to any one of claims 4-5, **characterized in that**, the apparatus further comprises:
a monitor closing module (340) configured to close a document system monitoring mechanism for a predetermined period through the DLNA server, the document system monitoring mechanism being configured to monitor documents in the DLNA server and to provide feedback to the DLNA server; wherein, a start time of the predetermined period is a moment when a preset signal is received by the DLNA server, and an end time of the predetermined period is a moment when the sharing path in the configuration document is read by the DLNA server.

7. A computer program, which when executing on a processor of a charging system, causes the processor to perform a method according to anyone of claims 1 to 3.

8. A recording medium readable by a computer and having recorded thereon a computer program including instructions configured to execute the steps of a method for sharing data according to any one of claims 1 to 3.

## Patentansprüche

1. Verfahren zur gemeinsamen Nutzung von Daten, das in einer DLNA-Vorrichtung angewendet wird, die mit einem DLNA-Server ausgestattet ist, umfassend einen Schritt des:
Detektierens (102, 201) eines ersten Ereignisses einer mobilen Speichervorrichtung, die in die DLNA-Vorrichtung eingesteckt ist,
Erfassens (104) eines Zuordnungspfades der mobilen Speichervorrichtung durch den DLNA-Server bei Detektion des ersten Ereignisses,
wobei Daten, die unter dem Zuordnungspfad in der mobilen Speichervorrichtung gespeichert sind, automatisch mit mindestens einem DLNA-Client gemeinsam genutzt werden können, sobald der Zuordnungspfad erfasst ist, und
wobei das Verfahren ferner folgenden Schritt umfasst:
gemeinsames Nutzen (106, 205) der Daten mit dem mindestens einen DLNA-Client gemäß dem Zuordnungspfad durch den DLNA-Server,
wobei das Verfahren **dadurch gekennzeichnet ist, dass** der Schritt des Erfassens (104) des Zuordnungspfades der mobilen Speichervorrichtung durch den DLNA-Server bei Detektion des ersten Ereignisses folgende Schritte umfasst:
Rufen (202) eines voreingestellten Skripts, wenn das erste Ereignis detektiert wird,
Hinzufügen (203) des Zuordnungspfades zu einem Konfigurationsdokument des DLNA-Servers durch das gerufene voreingestellte Skript, damit die Daten, die unter dem Zuordnungspfad in der mobilen Speichervorrichtung gespeichert sind, mit dem mindestens einen DLNA-Client über den DLNA-Server gemeinsam genutzt werden können, und
Veranlassen (204), durch das gerufene voreingestellte Skript, des DLNA-Servers, das Konfigurationsdokument neu zu laden, um gemeinsam nutzbare Daten zu identifizieren.

2. Verfahren nach Anspruch 1, **dadurch gekennzeichnet, dass** das Verfahren ferner folgende Schritte umfasst:
Detektieren eines zweiten Ereignisses der mobilen Speichervorrichtung, die von der DLNA-Vorrichtung getrennt wird,
Rufen eines voreingestellten Skripts, wenn das zweite Ereignis detektiert wird,
Entfernen des Zuordnungspfades aus einem Konfigurationsdokument des DLNA-Servers durch das gerufene voreingestellte Skript, damit die Daten, die unter dem Zuordnungspfad in der mobilen Speichervorrichtung gespeichert sind, nicht mehr gemeinsam mit dem mindestens einen DLNA-Client über den DLNA-Server nutzbar sind, und
Veranlassen, durch das gerufene voreingestellte Skript, des DLNA-Servers, das Konfigurationsdokument neu zu laden, um gemeinsam nutzbare Daten zu identifizieren.

3. Verfahren nach einem der Ansprüche 1-2, **dadurch gekennzeichnet, dass** das Verfahren ferner umfasst:
Schließen eines Dokumentensystem-Überwachungsmechanismus für einen zuvor festgelegten Zeitraum durch den DLNA-Server, wobei der Dokumentensystem-Überwachungsmechanismus dafür konfiguriert ist, Dokumente in dem DLNA-Server zu überwachen und eine Rückmeldung an den DLNA-Server zu übermitteln,
wobei eine Startzeit des zuvor festgelegten Zeitraums ein Moment ist, in dem ein voreingestelltes Signal durch den DLNA-Server empfangen wird, und eine Endzeit des zuvor festgelegten Zeitraums ein Moment ist, in dem der Zuordnungspfad in einem Konfigurationsdokument durch den DLNA-Server gelesen wird.

4. Vorrichtung zum gemeinsamen Nutzen von Daten, das in einer DLNA-Vorrichtung angewendet wird, die mit einem DLNA-Server ausgestattet ist, umfassend:
ein Einsteckdetektionsmodul (310), das dafür konfiguriert ist, ein erstes Ereignis einer mobilen Speichervorrichtung zu detektieren, die in die DLNA-Vorrichtung eingesteckt ist,
ein Pfaderfassungsmodul (320), das dafür konfiguriert ist, einen Zuordnungspfad der mobilen Speichervorrichtung durch den DLNA-Server bei Detektion des ersten Ereignisses zu erfassen, wobei Daten, die unter dem Zuordnungspfad in der mobilen Speichervorrichtung gespeichert sind, automatisch mit mindestens einem DLNA-Client gemeinsam genutzt werden können, sobald der Zuordnungspfad erfasst ist, und wobei die Vorrichtung ferner umfasst:
ein Datengemeinschaftsnutzungsmodul (330), das dafür konfiguriert ist, die Daten mit dem mindestens einen DLNA-Client gemäß dem Zuordnungspfad durch den DLNA-Server gemeinsam zu nutzen,
wobei die Vorrichtung **dadurch gekennzeichnet ist, dass**:
das Pfaderfassungsmodul (320) eine Skriptrufeinheit (320a), eine Pfadhinzufügungseinheit (320b), und eine Pfadleseeinheit (320c) umfasst,
die Skriptrufeinheit (320a) dafür konfiguriert ist, ein voreingestelltes Skript zu rufen, wenn das erste Ereignis detektiert wird,
die Pfadhinzufügungseinheit (320b) dafür konfiguriert ist, den Zuordnungspfad zu einem Konfigurationsdokument des DLNA-Servers durch das voreingestellte Skript hinzuzufügen, damit die Daten, die unter dem Zuordnungspfad in der mobilen Speichervorrichtung gespeichert sind, mit dem mindestens einen DLNA-Client über den DLNA-Server gemeinsam genutzt werden können, und
die Pfadleseeinheit (320c) dafür konfiguriert ist, den DLNA-Server durch das voreingestellte Skript zu veranlassen, das Konfigurationsdokument neu zu laden, um gemeinsam nutzbare Daten zu identifizieren.

5. Vorrichtung nach Anspruch 4, **dadurch gekennzeichnet, dass**:
das Pfaderfassungsmodul (320) ferner eine Trennungsdetektionseinheit und eine Pfadherausnahmeeinheit umfasst,
die Trennungsdetektionseinheit dafür konfiguriert ist, ein zweites Ereignis der mobilen Speichervorrichtung zu detektieren, die von der DLNA-Vorrichtung getrennt wird,
die Skriptrufeinheit (320a) ferner dafür konfiguriert ist, das voreingestellte Skript zu rufen, wenn das zweite Ereignis detektiert wird,
die Pfadherausnahmeeinheit dafür konfiguriert ist, den Zuordnungspfad aus einem Konfigurationsdokument des DLNA-Servers durch das gerufene voreingestellte Skript herauszunehmen, damit die Daten, die unter dem Zuordnungspfad in der mobilen Speichervorrichtung gespeichert sind, nicht mehr gemeinsam mit dem mindestens einen DLNA-Client über den DLNA-Server nutzbar sind, und
die Pfadleseeinheit (320c) ferner dafür konfiguriert ist, den DLNA-Server durch das gerufene voreingestellte Skript zu veranlassen, das Konfigurationsdokument neu zu laden, um gemeinsam nutzbare Daten zu identifizieren.

6. Vorrichtung nach einem der Ansprüche 4-5, **dadurch gekennzeichnet, dass** die Vorrichtung ferner umfasst:
ein Überwachungsschließmodul (340), das dafür konfiguriert ist, einen Dokumentensystem-Überwachungsmechanismus für einen zuvor festgelegten Zeitraum durch den DLNA-Server zu schließen, wobei der Dokumentensystem-Überwachungsmechanismus dafür konfiguriert ist, Dokumente in dem DLNA-Server zu überwachen und eine Rückmeldung an den DLNA-Server zu übermitteln, wobei eine Startzeit des zuvor festgelegten Zeitraums ein Moment ist, in dem ein voreingestelltes Signal durch den DLNA-Server empfangen wird, und eine Endzeit des zuvor festgelegten Zeitraums ein Moment ist, in dem der Gemeinschaftsnutzungspfad in dem Konfigurationsdokument durch den DLNA-Server gelesen wird.

7. Computerprogramm, das, wenn es auf einem Prozessor eines Ladesystems ausgeführt wird, den Prozessor veranlasst, ein Verfahren nach einem der Ansprüche 1 bis 3 auszuführen.

8. Aufzeichnungsmedium, das durch einen Computer gelesen werden kann und auf dem ein Computerprogramm aufgezeichnet ist, das Instruktionen enthält, die dafür konfiguriert sind, die Schritte eines Verfahrens zur gemeinsamen Nutzung von Daten nach einem der Ansprüche 1 bis 3 auszuführen.

## Revendications

1. Procédé pour partager des données appliqué dans un dispositif DLNA pourvu d'un serveur DLNA, comprenant une étape consistant à :
détecter (102, 201) un premier événement d'un dispositif de stockage mobile qui est branché sur le dispositif DLNA ;
acquérir (104) un chemin de montage du dispositif de stockage mobile par l'intermédiaire du serveur DLNA lors de la détection du premier événement,
dans lequel des données stockées sous le chemin de montage dans le dispositif de stockage mobile sont automatiquement partageables avec au moins un client DLNA une fois que le chemin de montage est acquis ; et dans lequel le procédé comprend en outre une étape consistant à :
partager (106, 205) les données avec le au moins un client DLNA en fonction du chemin de montage par l'intermédiaire du serveur DLNA ;
le procédé étant **caractérisé en ce que**, l'étape d'acquisition (104) du chemin de montage du dispositif de stockage mobile par l'intermédiaire du serveur DLNA lors de la détection du premier événement comprend les étapes consistant à :
appeler (202) un script prédéfini lorsque le premier événement est détecté ;
ajouter (203) le chemin de montage dans un document de configuration du serveur DLNA par l'intermédiaire du script prédéfini appelé, pour permettre que les données stockées sous le chemin de montage dans le dispositif de stockage mobile soient partageables avec le au moins un client DLNA via le serveur DLNA ; et
déclencher (204), par l'intermédiaire du script prédéfini appelé, le serveur DLNA pour recharger le document de configuration afin d'identifier des données partageables.

2. Procédé selon la revendication 1, **caractérisé en ce que**, le procédé comprend en outre les étapes consistant à :
détecter un second événement du dispositif de stockage mobile qui est débranché du dispositif DLNA ;
appeler un script prédéfini lorsque le second événement est détecté ;
supprimer le chemin de montage d'un document de configuration du serveur DLNA par l'intermédiaire du script prédéfini appelé pour faire que les données stockées sous le chemin de montage dans le dispositif de stockage mobile soient non partageables avec le au moins un client DLNA via le serveur DLNA ; et
déclencher, par l'intermédiaire du script prédéfini appelé, le serveur DLNA pour recharger le document de configuration afin d'identifier des données partageables.

3. Procédé selon l'une quelconque des revendications 1 à 2, **caractérisé en ce que**, le procédé comprend en outre :
la fermeture d'un mécanisme de surveillance de système de documents pendant une période prédéterminée par l'intermédiaire du serveur DLNA, le mécanisme de surveillance de système de documents étant configuré pour surveiller des documents dans le serveur DLNA et pour fournir une rétroaction au serveur DLNA ;
dans lequel, une heure de début de la période prédéterminée est un moment où un signal prédéfini est reçu par le serveur DLNA, et une heure de fin de la période prédéterminée est un moment où le chemin de montage dans un document de configuration est lu par le serveur DLNA

4. Appareil pour partager des données appliqué dans un dispositif DLNA pourvu d'un serveur DLNA, comprenant :
un module de détection de branchement (310) configuré pour détecter un premier événement d'un dispositif de stockage mobile qui est branché sur le dispositif DLNA ;
un module d'acquisition de chemin (320) configuré pour acquérir un chemin de montage du dispositif de stockage mobile par l'intermédiaire du serveur DLNA lors de la détection du premier événement,
dans lequel des données stockées sous le chemin de montage dans le dispositif de stockage mobile sont automatiquement partageables avec au moins un client DLNA une fois que le chemin de montage est acquis ; et dans lequel l'appareil comprend en outre :
un module de partage de données (330) configuré pour partager les données avec le au moins un client DLNA en fonction du chemin de montage par l'intermédiaire du serveur DLNA ;
l'appareil étant **caractérisé en ce que**, le module d'acquisition de chemin (320) comprend : une unité d'appel de script (320a), une unité d'ajout de chemin (320b) et une unité de lecture de chemin (320c) ;
l'unité d'appel de script (320a) est configurée pour appeler un script prédéfini lorsque le premier événement est détecté ;
l'unité d'ajout de chemin (320b) est configurée pour ajouter le chemin de montage dans un document de configuration du serveur DLNA par l'intermédiaire du script prédéfini, pour permettre que les données stockées sous le chemin de montage dans le dispositif de stockage mobile soient partageables avec le au moins un client DLNA via le serveur DLNA ; et
l'unité de lecture de chemin (320c) est configurée pour déclencher le serveur DLNA par l'intermédiaire du script prédéfini afin de recharger le document de configuration afin d'identifier des données partageables.

5. Appareil selon la revendication 4, **caractérisé en ce que**, le module d'acquisition de chemin (320) comprend en outre : une unité de détection de débranchement et une unité de suppression de chemin ;
l'unité de détection de débranchement est configurée pour détecter un second événement du dispositif de stockage mobile qui est débranché du dispositif DLNA ;
l'unité d'appel de script (320a) est en outre configurée pour appeler le script prédéfini lorsque le second événement est détecté ;
l'unité de suppression de chemin est configurée pour supprimer le chemin de montage d'un document de configuration du serveur DLNA par l'intermédiaire du script prédéfini appelé pour faire que les données stockées sous le chemin de montage dans le dispositif de stockage mobile soient non partageables avec le au moins un client DLNA via le serveur DLNA ; et
l'unité de lecture de chemin (320c) est en outre configurée pour déclencher le serveur DLNA par l'intermédiaire du script prédéfini appelé afin de recharger le document de configuration afin d'identifier des données partageables.

6. Appareil selon l'une quelconque des revendications 4 à 5, **caractérisé en ce que**, l'appareil comprend en outre :
un module de fermeture de moniteur (340) configuré pour fermer un mécanisme de surveillance de système de documents pendant une période prédéterminée par l'intermédiaire du serveur DLNA, le mécanisme de surveillance de système de documents étant configuré pour surveiller des documents dans le serveur DLNA et pour fournir une rétroaction au serveur DLNA ; dans lequel, une heure de début de la période prédéterminée est un moment où un signal prédéfini est reçu par le serveur DLNA, et une heure de fin de la période prédéterminée est un moment où le chemin de partage dans le document de configuration est lu par le serveur DLNA.

7. Programme informatique qui, lors de l'exécution sur un processeur d'un système de charge, amène le processeur à effectuer un procédé selon l'une quelconque des revendications 1 à 3.

8. Support d'enregistrement lisible par un ordinateur et sur lequel est enregistré un programme informatique incluant des instructions configurées pour exécuter les étapes d'un procédé pour partager des données selon l'une quelconque des revendications 1 à 3.
